Europäisches Patentamt

European Patent Office

Office européen des brevets

(11) Publication number: **0 020 149**
A1

## EUROPEAN PATENT APPLICATION

(21) Application number: 80301788.8

(22) Date of filing: 29.05.80

(51) Int. Cl.³: **B 65 G 43/02**

(30) Priority: 30.05.79 GB 7918745
30.05.79 GB 7918746

(43) Date of publication of application: 10.12.80
Bulletin 80/25

(84) Designated Contracting States: BE DE FR GB IT SE

(71) Applicant: CERA INTERNATIONAL LIMITED, Cera House Mitcham Industrial Estate Streatham Road, Mitcham Surrey (GB)

(72) Inventor: Alexander, Robert Osteen Cera House, Mitcham Industrial Estate Streatham Road, Mitcham Surrey (GB)

(74) Representative: Everitt, Christopher James Wilders et al, F.J. CLEVELAND & COMPANY 40/43 Chancery Lane, London WC2A 1JQ (GB)

(54) **Drag conveyors.**

(57) A drag conveyor is driven by a reversible electric motor through a torque limiter (18). Each intermediate guide (15A) around which each chain (11A) of the conveyor (10) turns from its lower horizontal run into its upwardly-inclined run is pivotally mounted and is counterweighted against deflection from its normal location. Hence the guide (15A) can be deflected from that location to allow passage past it of solid matter that would otherwise cause jamming. If the conveyor (10) jams even after deflection of the pivotally mounted guide (15A), the torque limiter (18) is adapted to effect automatic reversal of the drag conveyor drive motor to reverse the conveyor (10) for a limited period whereafter normal forwards drive is restored automatically. An alarm is provided which is actuated automatically by a subsequent operation of the torque limiter (18) in response to jamming of the conveyor (10) that was not cleared by reversal of the conveyor (10).

0020149

-1-

DRAG CONVEYORS

This invention relates to drag conveyors which are provided in liquid collecting tanks for the purpose of removing from liquid collected in such tanks solids such as swarf and soils which are conveyed into the tanks with liquid collected in the tanks. Such drag conveyors are commonly used in coolant collecting tanks of centralised machine tool coolant filtration systems, and in washing fluid collecting tanks of industrial parts washing machines and air washers.

A drag conveyor can be jammed in use by solid matter it has collected to convey out of the tank. With this problem in mind, it is known to fit a drag conveyor power plant with a torque limiter whereby the drive is effectively disconnected from the conveyor by the action of the torque limiter when the output torque required to drive the conveyor reaches the limit torque that is determined by the setting of the torque limiter such as will occur when the conveyor jams. It is also known to provide an alarm device which is activated in response to operation of the torque limiter to effectively disconnect the drive from the conveyor.

-2-

An object of this invention is to minimise the time for which a drag conveyor is non-operational due to jamming.

According to this invention, a drag conveyor power plant includes a reversible motor which is arranged to drive the conveyor through a torque limiter, and a motor control circuit for the reversible motor, and the motor control circuit having reversible switching means connected into it in such a way that, when the motor is energised to drive the drag conveyor, the power plant drives the conveyor forwards when the reversible switching means is in its normal mode and drives the conveyor backwards when the reversible switching means is in its other mode, the reversible switching means being operatively associated with the torque limiter in such a way that the reversible switching means is tripped from its normal mode to its other mode automatically by the action of the torque limiter when the power plant output torque reaches the limit torque that is determined by the setting of the torque limiter.

Preferably the torque limiter is an automatic resetting torque limiter.

Preferably the reversible switching means is adapted to reassume its normal mode automatically at the end of a predetermined time interval after being tripped

-3-

to its other mode by the action of the torque limiter.

An alarm device may be provided and arranged to be activated automatically if the power plant output torque required to drive the conveyor forwards when the reversible switching means reassumes its normal mode is not less than the limit torque.

Conveniently the power plant is incorporated in a drag conveyor comprising conveying means for conveying solid matter along a path and a guide which guides the conveying means around a turn of less than 180° in the path, the turn leading into an upwardly inclined portion of the guide path, wherein said guide is pivotally mounted and is urged into a normal location but can be deflected from that location to allow the passage past it of solid matter that would otherwise cause jamming.

Preferably said guide comprises a pivotally mounted counter weighted beam, the counterweight acting to urge said guide into said location.

The preferred form of drag conveyor includes conveying means for conveying solid matter along a path, the conveying means comprising a pair of endless flexible pulling means which are interconnected at spaced intervals by pusher means, and, for each pulling means, a guide which guides the respective pulling means and hence the conveying means around a turn of

-4-

less than 180° in the path, the turn leading into an upwardly inclined portion of the guide path, wherein each said guide comprises a respective pivotally mounted counterweighted beam, each counterweight acting to urge the respective guide into a normal location and the pivotal mounting of each counterweighted beam allowing the respective guide to be deflected from its normal location to allow passage past it of solid matter that would otherwise cause jamming.

Each counterweighted beam may be a composite beam comprising a spaced pair of beam parts which support the respective counterweight so that it spans the gap between them. Conveniently each said guide comprises a roller which is located between and is journalled within the two beam parts of the respective composite beam.

An alternative form of counterweighted beam is a skid bar which serves as the respective guide.

-5-

A drag conveyor in which this invention is embodied is described now by way of example with reference to the accompanying drawings, of which:-

Figure 1 is a sectioned diagram of the drag conveyor, the section being in the central longitudinal plane of the conveyor;

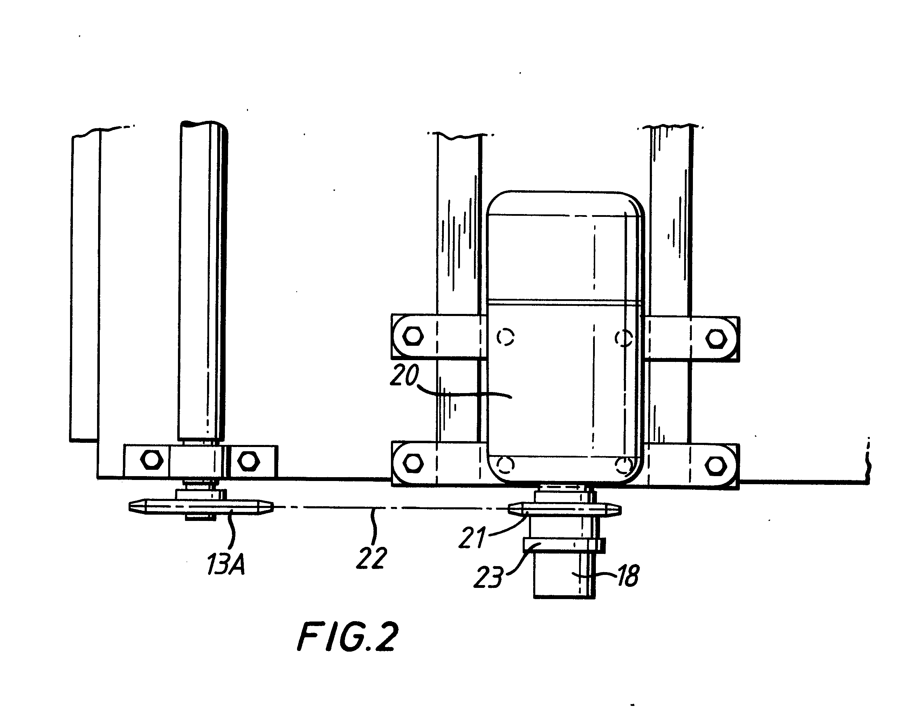

Figure 2 is a plan view of the power plant and a main drive sprocket of the conveyor shown in Figure 1;

Figure 3 is a view in perspective of the power output end of the power plant shown in Figure 2;

Figure 4 is an electric circuit diagram illustrating the electric control system for the power plant shown in Figure 2;

Figure 5 is a plan view of a detail shown in Figure 1;

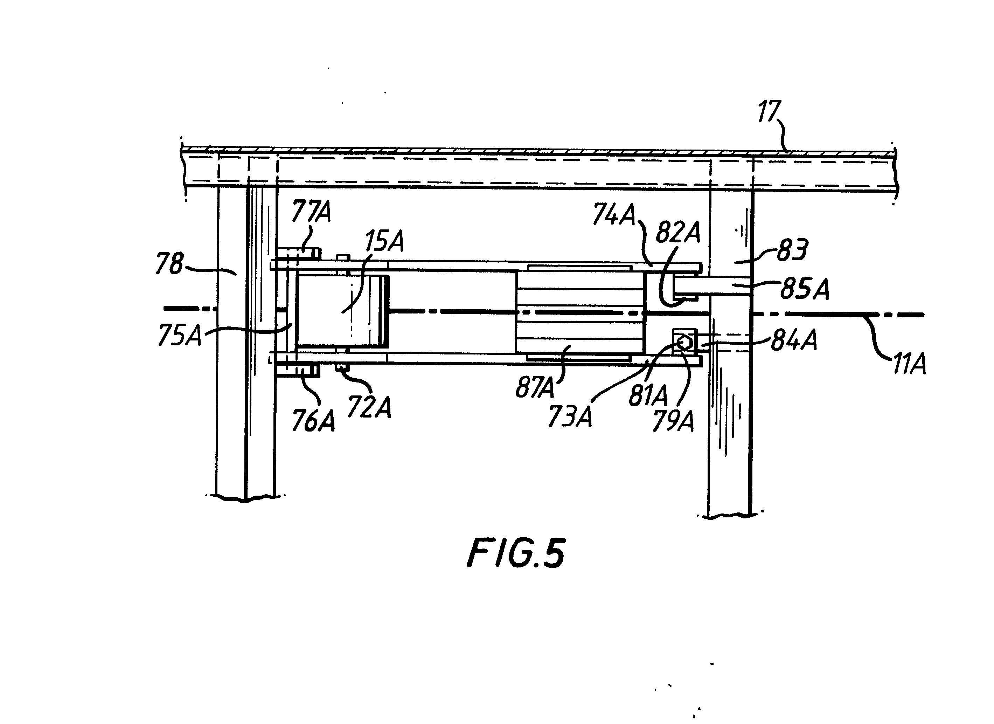

Figure 6 is a fragmentary plan view of a modified form of drag conveyor incorporating

-6-

an alternative to the detail shown in Figure 5; and

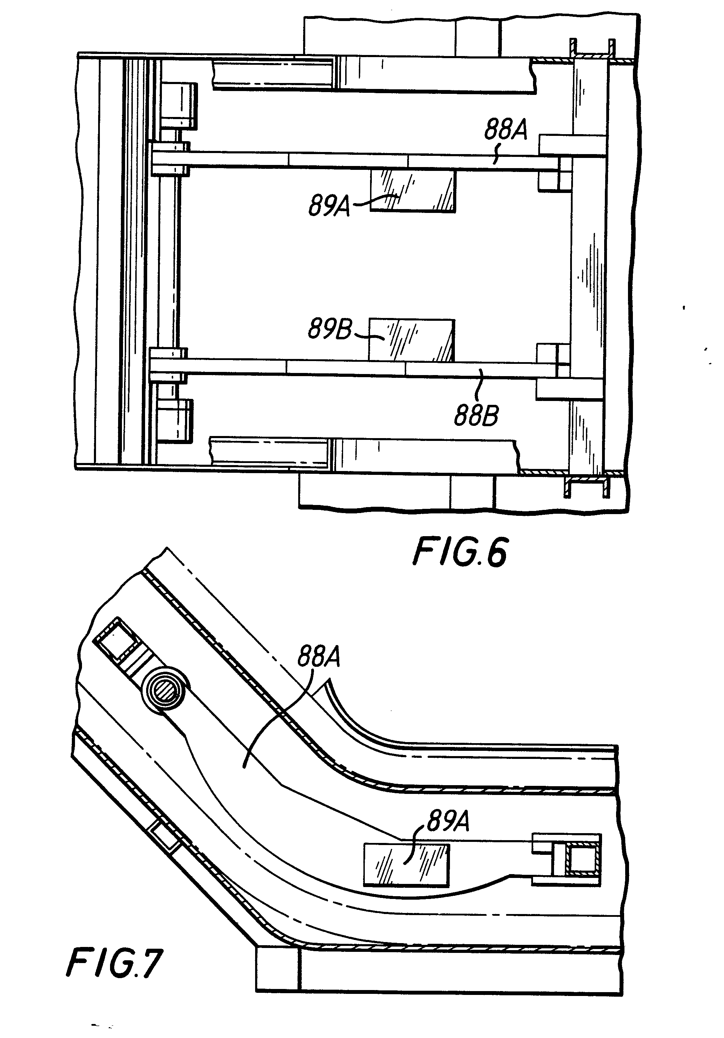

Figure 7 is a side view of the alternative form of the detail as shown in Figure 6.

The drag conveyor comprises an endless conveyor 10 which is formed in the usual manner by a pair of endless pulling chains 11A and 11B which are interconnected at spaced intervals by lengths 12 of angle iron. Only one, viz. chain 11A of the two chains 11A and 11B, and its associated components are shown in the drawings. It is believed the location, arrangement and configuration of the other chain 11B and its associated components will be readily apparent. The reference characters for like components associated with each chain 11A and 11B comprise the same numeral and the letterA or B that is incorporated in the reference for that respective chain. Each chain 11A, 11B runs on a respective main drive sprocket 13A, 13B, a respective end idler sprocket 14A, 14B and a respective intermediate guide roller 15A, 15B so that the path of the endless conveyor 10 turns around the rollers 15A and 15B from a lowermost portion to an upwardly inclined portion and also comprises a curved return portion which runs downwards from the main drive sprockets 13A and 13B, which are fixed coaxially to a common axle, under a curved guide 16 to the end idler sprockets 14A and 14B which are also coaxial. The main drive sprockets 13A and 13B are at the upper end of the upwardly inclined portion of the conveyor path. The intermediate guide rollers 15A and 15B are pivotally mounted and are urged into a normal location from which they can be deflected, the arrangement being fully described below.

Those parts of the endless conveyor 10 that pass around the end idler sprockets 14A and 14B and along the lowermost path portion are normally spaced from adjacent surfaces of the tank 17 by a substantially uniform distance. The lengths 12 of angle iron form pushers which project outwardly from the chains 11A and 11B and pass close to the adjacent surfaces of the tank 17 as they travel around the end idler sprockets 14A and 14B, along the lowermost path portion and up the upwardly inclined path portion.

An automatically resettable torque limiter 18 is carried by an output shaft 19 of a power plant 20 which includes a reversible electric motor. A drive sprocket 21 is carried by the torque limiter 18 and is drivingly coupled to the main drive sprocket 13A by a drive chain 22.

The torque limiter 18 also carries a radial disc 23 which is movable axially relative to the main drive sprocket 21 against the action of a heavy coil spring 24. The main drive sprocket 21 is located between the disc 23 and the casing of the power plant 20 from which the output shaft 19 projects. The coil spring 24 urges the disc 23 towards the drive sprocket 21.

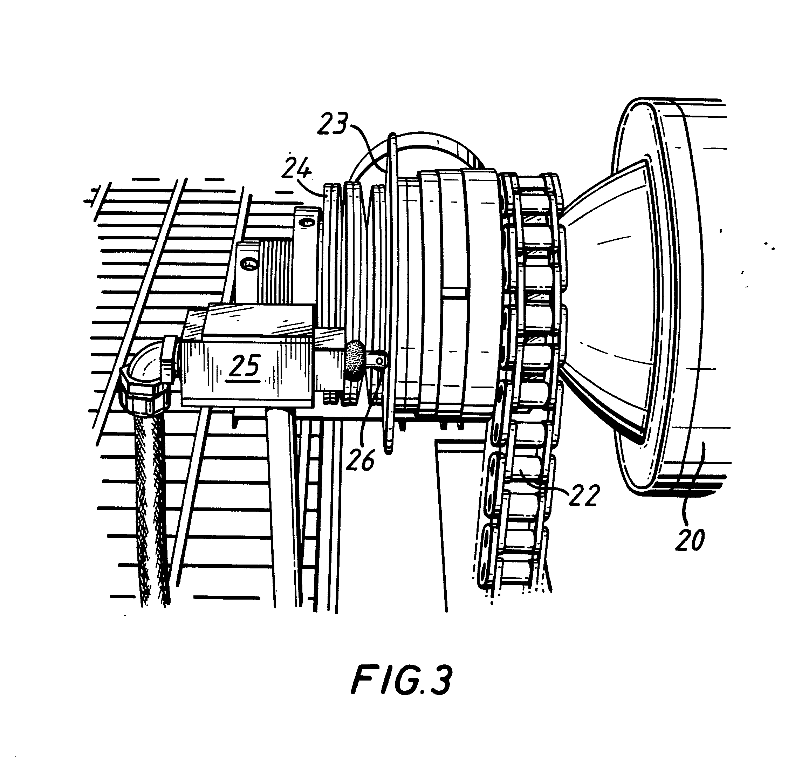

Figure 3 shows a micro-switch housing 25 which is fixedly mounted adjacent the torque limiter 18 and which has a switch actuating probe 26 projecting from it towards the radial disc 23 and parallel to the power plant output shaft 19. There is a clearance between the probe 26 and the disc 23 when the drag conveyor 10 is inoperative. Normally the contacts of the microswitch are open. They are made by axial displacement of the probe 26 into the housing 25.

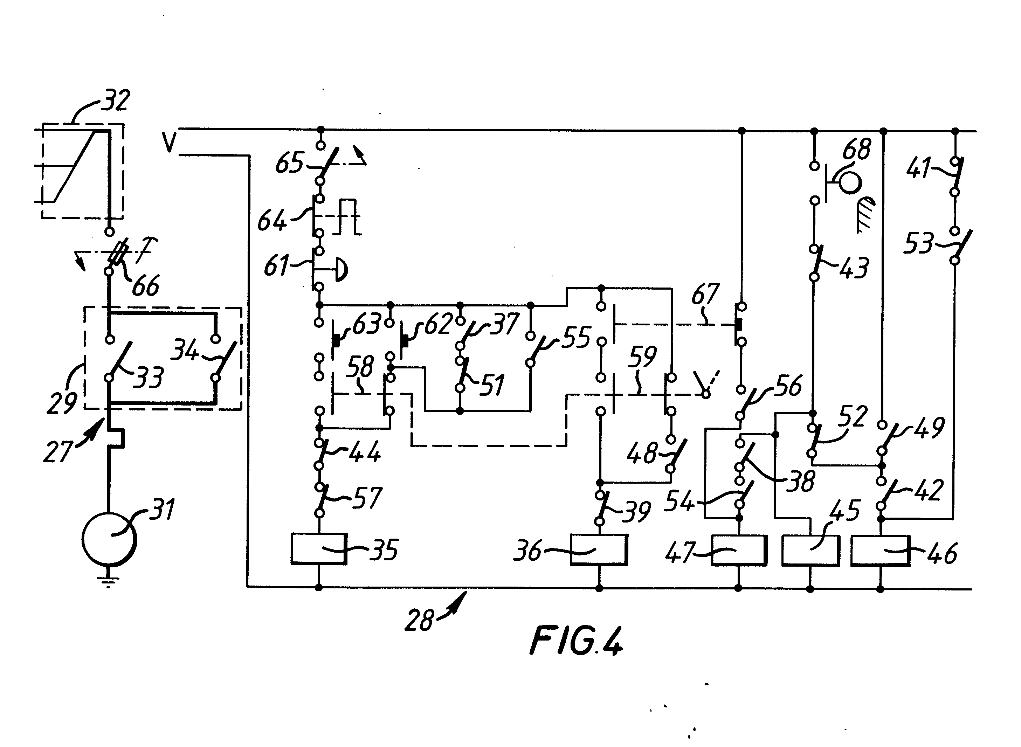

Figure 4 illustrates the power plant electric control system which comprises a three-phase power circuit 27 and a single phase combined control and alarm circuit 28.

The power circuit 27 comprises a motor reversing switch circuit 29 by which the reversible electric motor 31 of the power plant 20 is connected to a three-phase power supply 32. The motor reversing switch circuit 29 comprises two normally-open three-phase switches 33 and 34 which are connected in parallel between the motor 31 and the power supply 32. For the sake of convenience, the leads by which the switches 33 and 34 are connected between the motor 31 and the supply 32 are shown as simple leads and the switches 33 and 34 are shown as simple switches, but it is to be understood that they are schematic representations of the multiple leads and switches appropriate for three-phase circuitry. The connections of the switches 33 and 34 in the switch circuit 29 are arranged so that the motor 31 is driven forwards when the contacts of the switch 33 are made and is driven in the reverse direction when the contacts of the switch 34 are made.

Each of the switches 33 and 34 is controlled by a respective one of two contactors, viz. a forwards contactor 35 and a reverse
contactor 36 which are both included in the
combined control and alarm circuit 28.
Conveniently each contactor 35, 36 is a
commercially available contactor such as a
Telemecanique Type LC2-D099F + LA2-D22 + LAI
-D22. The contacts of each of the switches 33
and 34 are made when the respective contactor
35, 36 is energised and are broken when it is
deenergised.

The combined control and alarm circuit
28 also includes two other normally-open switches
37 and 38 which are controlled by the forwards
contactor 35 so that their contacts are made
when that contactor 35 is energised and are
broken when it is deenergised, a normally-closed
switch 39 which is controlled by the forwards
contactor 35 so that its contacts are broken
when the contactor 35 is energised and are made
when it is deernergised, and a normally-closed
switch 41 which is controlled by the forwards
contactor 35 so that its contacts remain closed
for a predetermined time interval after the
forwards contactor 35 is energised and are then
opened and are closed when it is deenergised.
There are also a normally-open switch 42 and two normally-closed switches 43 and 44 which are controlled by the reverse contactor 36 so that their contacts are respectively made or broken when the contactor 36 is energised and vice versa when it is deenergised. In addition there are three relays, viz. an auto reverse relay 45, a reset relay 46 and a fault relay 47. The auto-reverse relay 45 controls two normally-open switches 48 and 49, a normally-closed switch 51 and a delayed-opening normally-closed switch 52 which is similar to the switch 41. The reset relay 46 controls three normally-open switches 53,54 and 55 so that their contacts are made when it is energised and are broken when it is deenergised. The fault relay 47 controls a normally-open switch 56 and a normally-closed switch 57. The switches 48, 49 and 51-57 are all included in the combined control and alarm circuit 28. The relays 45,46 and 47 are conveniently commercially available relays such as a Telemecanique Type CA2-DN131F + LA2-D22 for the auto-reverse relay 45, a Telemecanique Type CA2-DN140F for the reset relay 46 and a Telemecanique Type CA2-DN131F for the fault relay 47.

The power plant control circuit has two modes, viz. an automatic mode and a manual mode. A ganged pair of changeover switches 58 and 59 are provided for switching the system from one of those two modes to the other.

The forwards contactor 35 is connected in series with the normally-closed switches 44 and 57 between one terminal of the control voltage supply V and a common terminal of the changeover switch 58. The other two terminals of the changeover switch 58, viz. the automatic terminal and the manual terminal, are connected in parallel with one terminal of a push button operable main stop switch 61 respectively, via either a push button operable automatic forward start switch 62 or a push button operable forwards inch switch 63 for manual control. Conveniently, the three push button operable switches 61, 62 and 63 are commercially available switches such as a Telemecanique Type XB2-MA42 for the stop switch 61, a Telemecanique Type XB2-MA31 for the automatic forwards start switch 62 and a Telemecanique Type XB2-MA21 for the forwards inch switch 63. Also the ganged pair of change-over switches 58 and 59 together may comprise a commercially available switch such as a Telemecanique Type XB2-MD12. The other terminal of the main stop switch 61 is connected to the other terminal of the control voltage supply V via a normally-closed overload switch 64 and a normally-closed fused switch 65 which are connected in series. The overload switch 64 may be a commercially available unit such as a Telemecanique Type LRI - DO9304. The fused switch 65 is operatively linked with a fuse 66 in the three phase power circuit 27 and the respective fuse carrier may be a commercially available device such as a Telemecanique Type DK1 - CB1332. The circuit 28 also includes a reverse inch switch 67 which is a push button operable double pole changeover switch and which may be a Telemecanique Type XB2-MA21 switch.

The normally-closed switch 51 and the normally-open switches 37 and 55 are connected across the terminals of the automatic forwards start switch 62, the normally-open switch 55 being in parallel with the switches 37 and 51 which are in series.

The said one terminal of the main stop switch 61 is also connected in parallel to one of the terminals of each of the poles of

-14-

the changeover switch 59, indirectly via the contacts of the normally-broken pole of the changeover switch 67 to the respective terminal of the pole of the changeover switch 59 which is made for the manual mode, and directly to the other respective terminal which is a terminal of the normally-made pole which is made for the automatic mode. The other terminal of the pole of the changeover switch 59 that is made for the automatic mode is connected to said one terminal of the control voltage supply V via the normally-open switch 48, the normally-closed switch 39 and the reverse contactor 36 which are connected in series. The other terminal of the pole of the changeover switch 59 that is made for the manual mode is connected to the lead which connects the normally-open switch 48 to the normally-closed switch 39.

One terminal of the normally-closed pole of the changeover switch 67 is directly connected to said other terminal of the control voltage supply V and the other terminal of that pole is connected to said one terminal of the supply V via the normally-open switch 56 and the fault relay 47 which are connected in series.

One terminal of the micro-switch 68 that is housed in the housing 25 is connected directly to said other terminal of the control voltage supply V. The other terminal of the micro-switch 68 is connected to said one terminal of the supply V via the normally-closed switch 43 and the auto-reverse relay 45 which are connected in series. The micro-switch 68 may be a commercially available micro-switch such as a Telemecanique Type XCK-BlD02. The lead which connects the normally-open switch 56 and the fault relay 47 and the lead which connects the normally-closed switch 43 and the auto-reverse relay 45 are connected together through the two normally-open switches 38 and 54 which are in series. The reset relay 46 and the normally-open switches 42 and 49 are connected in series across the control voltage supply V. The lead that connects the reset relay 46 to the normally-open switch 42 is connected to said other terminal of the supply V via the normally-open switch 53 and the delayed-opening normally-closed switch 41 which are connected in series. Finally the delayed opening normally-closed

-16-

switch 52 is connected between the lead that connects the normally-open switches 42 and 49 and the lead that connects the normally-closed switch 43 to both the normally-open switch 38 and the auto-reverse relay 45.

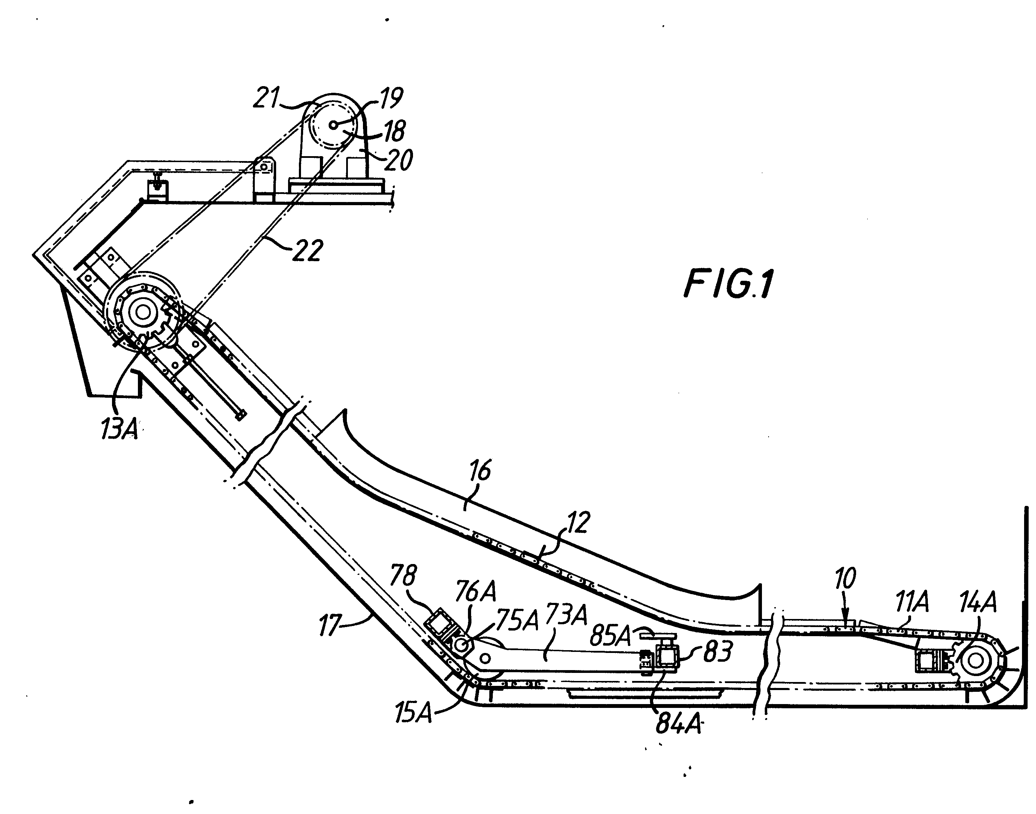

Referring again to Figure 1, each intermediate guide roller 15A, 15B has an axle which is journalled at either end (see Figure 5) in a respective one of a respective. pair of parallel cranked beams 73A and 74A, 73B and 74B nearer to one end of each of those beams 73A and 74A, 73B and 74B than to the other and substantially at the elbow of the respective beam. The said one ends of the two cranked beams 73A and 74A, 73B and 74B of each pair are journalled on a respective common shaft 75A, 75B, the two common shafts 75A and 75B being fixedly supported substantially coaxially by respective pairs of support brackets 76A and 77A, 76B and 77B, which are all mounted on a common main beam 78 which is mounted in the walls of the tank 17 and which extends through the spaces enclosed by the two chains 11A and 11B adjacent to the upwardly inclined path portion of the conveyor 10.

-17-

The cranked beam 73A, 73B of each pair of such beams that is nearer the other pair has a plate 79A, 79B fixed to its face which faces the other beam 74A, 74B of the respective pair. Each plate 79A, 79B has a tapped through bore which receives a stop screw 81A, 81B. The said other beam 74A, 74B of each pair has a stop plate 82A, 82B fixed to its lower edge and projecting towards the other pair of beams. A common stop support beam 83 is mounted in the walls of the tank 17 and extends parallel to the main beam 78 through the spaces enclosed by the two chains 11A and 11B above the lowermost path portion of the conveyor 10 at a location which is spaced from the two common shafts 75A and 75B by a distance which is slightly greater than the length of each cranked beam 73A, 73B, 74A, 74B. The stop support beam 83 has a pair of lower stop plates 84A and 84B fixed to its underside, each lower stop plate 84A, 84B projecting from the beam 83 under a respective one of the two stop screws 81A and 81B which co-operates with it to limit angular movement in the clockwise direction as seen in Figure 1 about the respective common shaft

-18-

75A, 75B of the assembly that comprises the composite beam formed by the respective pair of cranked beams 73A and 74A, 73B and 74B, and the guide roller 15A, 15B that is journalled within them. The stop support beam 83 also has a pair of upper stop plates 85A and 85B fixedly mounted on its top, each upper stop plate 85A, 85B projecting from the beam 83 over a respective one of the two stop plates 82A and 82B that are fixed to the cranked beams 74A and 74B, and co-operating with that respective stop plate 82A, 82B to limit angular movement in the anti-clockwise direction, as seen in Figure 1 about the respective common shaft 75A, 75B of the assembly that comprises the respective pair of cranked beams 73A and 74A, 73B and 74B, and the guide roller 15A, 15B that is journalled within them.

A counterweight 87A, 87B bridges the gap between the two cranked beams 73A and 74A, 73B and 74B of the respective pair, being welded to the tops of the respective pair of cranked beams 73A and 74A, 73B and 74B. Each counterweight 87A, 87B is located so that the line of action of its gravitational force passes between the respective roller axle 72A, 72B and the

-19-

respective stop screw 81A, 81B or stop plate 82A, 82B carried by the respective cranked beams 73A, 74B, 73B and 74B. In an alternative arrangement (not shown) the ends of each counterweight are located in an elongate slot which is formed in the respective cranked beam. The length of each slot is such that a range of possible locations along the respective cranked beam for the end of the counterweight that is inserted into it is provided.

For normal operation of the conveyor 10, the ganged pair of switches 58 and 59 are set as shown in Figure 4, hence for automatic operation. The button of the forwards start switch 62 is depressed to start the conveyor 10. Hence the forwards contactor 35 is energised so that the contacts 33 in the power circuit 27 are made and the motor 31 is driven forwards. Energisation of the forwards contactor 35 also makes the contacts of the normally-open switch 37 so that the circuit through the forwards contactor 35 is maintained via the switch 37 and the normally-closed switch 51.

The power plant 20 normally drives the drag conveyor 10 clockwise, as seen in Figure 1, through its output shaft 19, the torque

0020149

-20-

limiter 18, the drive sprocket 21, the drive chain and the upper main drive sprockets 13A and 13B of the conveyor 10. The counterweights 87A and 87B are selected and located upon the pairs of cranked beams 73A and 74A and 73B and 74B such that the moment about the axis of the respective common shaft 75A,75B of the weight of the assembly of the respective pair of cranked beams 73A and 74A, 73B and 74B, the respective intermediate roller 15A, 15B and the respective counterwieght 87A, 87B is less than the limit torque that is determined by the setting of the torque limiter 18.

If a piece of swarf, or other solid matter should be deposited on one of the chains 11A and 11B and be conveyed with that chain 11A, 11B towards the respective intermediate guide roller 15A, 15B, that roller 15A, 15B will rise over it, the pair of cranked beams 73A and 74A, 73B and 74B in which it is journaled pivoting about the respective common shaft 75A, 75B as it does so. Hence the tendency for the conveyor 10 to become jammed by such solid matter being caught between the intermediate roller 15A, 15B and the chain 11A, 11B is avoided

-21-

providing that the size of the piece of swarf or other solid matter is not so great that it causes abutment with the respective upper stop plate 85A, 85B of the respective stop plate 82A, 82B that is fixed to the respective cranked beam 74A, 74B.

The counterweights 87A and 87B ensure that the stop screws 81A and 81B are normally resting upon the respective lower stop plates. 84A and 84B. Hence the rollers 15A and 15B are normally located with their axes substantially coaxial and in substantially the same horizontal plane as the axes of the end idler sprockets 14A and 14B so that the lowermost run of the chains 11A and 11B is substantially horizontal.

The stop screws 81A and 81B are provided to enable the normal location of the guide rollers 15A and 15B to be adjusted.

In the event of forwards movement of the conveyor 10 being impeded by solid matter being conveyed, say because the size of a piece of swarf is sufficient to deflect one of the intermediate rollers 15A and 15B far enough to cause abutment of the respective stop plate

0020149

-22-

82A, 82B with the respective upper stop plate 85A, 85B, the output torque required to be exerted by the power plant 19 to drive the conveyor 10 increases. When that output torque becomes excessive, the torque limiter 17 operates automatically to effectively disconnect the output shaft 18 from the drive sprocket 20, say by slipping or freewheeling, the radial disc 22 being moved axially, against the action of the coil spring 23, in the process. Hence the probe 25 is moved by the disc 22 to make the contacts of the micro-switch 68 housed in the housing 24.

The auto-reverse relay 45 is energised by closure of the contacts of the microswitch 68. Hence the normally-closed switch 51 is opened and the forwards contactor 35 is deenergised so that the switch 33 in the power circuit 27 is opened and the motor 31 is stopped. The consequent closure of the switch 49 and the delay in the opening of the switch 52 results in the energisation of the auto-reverse relay 45 being maintained. Closure of the switch 48 causes the reverse contactor 36 to be energised so that the switch 34 is closed and the motor 31 is run

0020149

-23-

in reverse to drive the conveyor 10 in the reverse direction, that is anti-clockwise as seen in Figure 1, the contacts of the microswitch 68 being re-opened by reversal of the conveyor 10.

The reset relay 46 is energised by the closure of the two switches 49 and 42 that accompanies the energisation of the auto-reverse relay 45 and the consequent energisation of the reverse contactor 36. Energisation of the reset relay 46 is maintained by the consequent closure of the switch 53.

The predetermined delay in the opening of the switch 52 following energisation of the auto-reverse relay 45 determines the period for which the conveyor 10 is driven in reverse since it is sufficient to ensure that the contacts of the microswitch 68 open before the switch 52 opens. It follows that the auto-reverse relay 45 is deenergised by opening of the switch 52 and the consequent opening of the switch 48 deenergises the reverse contactor 36 so that the switch 34 in the power circuit 27 is opened and the motor 31 stopped, thus stopping the conveyor 10 which should have travelled

-24-

sufficiently far in the reverse direction to free the jammed solid matter that caused the initial resistance to its forwards movement.

The forwards contactor 35 is reenergised because the switch 55 was closed by energisation of the reset relay 46 and the switch 44 recloses with deenergisation of the reverse contactor 36. Hence the conveyor 10 is again driven forwards. The circuit 28 is reset for normal forwards operation by the delayed opening of switch 41 which deenergises the reset relay 46.

If the solid matter that caused the initial resistance to forwards movement of the conveyor 10 has not been cleared by reversal of the travel of the conveyor, the torque limiter 17 will operate automatically again once the power plant 19 starts driving the conveyor 10 forwards and before the switch 41 has opened to deenergise the reset relay 46. The consequent closure of the microswitch 68 will energise the fault relay 47 because the switch 54 is still closed. The switch 57 opens to deenergise the forwards contactor 35 and stop the conveyor and an alarm device is activated to emit an alarm signal.

The circuit 28 may be provided with a counter which is arranged so that operation of the alarm device to emit an alarm signal when jammed matter has not been cleared is delayed until there have been several automatic cyclical reversals of the direction of travel of the conveyor 10.

Figures 6 and 7 illustrate an alternative to the counterweighted beam assembly that carries each guide roller 15A, 15B and that is illustrated in Figure 5. The alternative shown in Figures 6 and 7 is for use with roller chain and comprises, for each endless roller chain of the conveyor, a pivotally-mounted counterweighted skid bar 88A, 88B. Figure 7 shows that the underside of each skid bar 88A, 88B is curved for bearing on the respective roller chain to guide it around the respective bend in its path. The details of the pivot mounting and the stop arrangement at the other end of each bar 88A, 88B will be apparent from the foregoing description. Each bar 88A, 88B carries its

-26-

counterweight 89A, 89B on its face adjacent
the other bar 88A, 88B.

0020149

CLAIMS

1.  A drag conveyor power plant including a reversible motor which is arranged to drive the conveyor through a torque limiter, and a motor control circuit for the reversible motor, the motor control circuit having reversible switching means connected into it in such a way that, when the motor is energised to drive the drag conveyor, the power plant drives the conveyor forwards when the reversible switching means is in its normal mode and drives the conveyor backwards when the reversible switching means is in its other mode, the reversible switching means being operatively associated with the torque limiter in such a way that the reversible switching means is tripped from its normal mode to its other mode automatically by the action of the torque limiter when the power plant output torque reaches the limit torque that is determined by the setting of the torque limiter.

2.  A drag conveyor power plant according to Claim 1, wherein the torque limiter is an automatic resetting torque limiter.

3.  A drag conveyor power plant according to Claim 1, *or Claim 2* wherein the reversible switching means is adapted to reassume its normal mode automatically at the end of a predetermined time interval after being tripped to its other mode by the action of the torque limiter.

4. A drag conveyor power plant according to Claim 1, _Claim 2 or Claim 3,_ wherein an alarm device is provided and arranged to be activated automatically if the power plant output torque required to drive the conveyor forwards when the reversible switching means reassumes its normal mode is not less than the limit torque.

5. A drag conveyor power plant according to any one of Claims 1 _to 4_ incorporated in a conveyor comprising conveying means for conveying solid matter along a path and a guide which guides the conveying means around a turn of less than 180$^O$ in the path, the turn leading into an upwardly inclined portion of the guide path, wherein said guide is pivotally mounted and is urged into a normal location but can be deflected from that location to allow the passage past it of solid matter that would otherwise cause jamming.

6. A combination according to Claim 5, wherein said guide comprises a pivotally mounted counterweighted beam, the counterweight acting to urge said guide into said location.

7. A drag conveyor power plant according to any one of Claims 1 _to 4_ in combination with a conveyor including conveying means for conveying solid matter along a path the conveying means comprising a pair of endless flexible pulling means which are interconnected at spaced intervals by pusher means, and, for each pulling means, a guide which guides the respective pulling means and hence the conveying means around a turn of less than 180° in the path, the turn leading into an upwardly inclined portion of the guide path, wherein each said guide comprises a respective pivotally mounted counterweighted beam, each counterweight acting to urge the respective guide into a normal location and the pivotal mounting of each counterweighted beam allowing the respective guide to be deflected from its normal location to allow passage past it of solid matter that would otherwise cause jamming.

8. A combination according to Claim 7, wherein each counterweighted beam is a composite beam comprising a spaced pair of beam parts which support the respective counterweight so that it spans the gap between them.

9. A combination according to Claim 8, wherein each said guide comprises a roller which is located between and is journalled within the two beam parts of the respective composite beam.

10. A combination according to Claim 6, wherein each said counterweighted beam is a skid bar which serves as the respective guide.

0020149

FIG1

0020149

FIG.2

13A

22

20

21

23

18

FIG.3

FIG.4

4/6

0020149

FIG.5

88A

89A

89B

88B

*FIG.6*

88A

89A

*FIG.7*

## DOCUMENTS CONSIDERED TO BE RELEVANT

| Category | Citation of document with indication, where appropriate, of relevant passages | Relevant to claim |
|---|---|---|
| | <u>US − A − 3 737 749</u> (T. SCHMIT) <br> * Column 1, line 39 − column 2, line 39; figures * | 1,2,3 |
| | − − | |
| | <u>US − A − 1 938 720</u> (N. PREBLE) <br> * The whole document * | 1,2 |
| | − − | |
| | <u>US − A − 3 809 212</u> (W. GOTHE) <br> * Abstract; figures * | 4 |
| | − − | |
| | <u>FR − A − 2 133 674</u> (F.L. SMIDTH) <br> * Claims; figures * | 1,3 |
| | − − | |
| | <u>CH − A − 554 790</u> (BÜHLER A.G.) <br> * Column 4, lines 5−21; figures * | 1,3 |
| | − − | |
| | <u>GB − A − 705 378</u> (BLAW KNOX LIM.) <br> * Page 2, lines 19−38; figures * | 5,9 |
| | − − | |
| | <u>US − A − 2 438 068</u> (S.M. MERCIER) <br> * Column 2, line 44 − column 3, line 10 ; figures * | 5 |
| | − − | |
| | <u>DE − A − 2 412 015</u> (DEUTSCHE BABCOCK & WILCOX A.G.) <br> * Page 5, line 11 − page 6, line 18; figures * | 5,6 |
| | − − − − | |

**CLASSIFICATION OF THE APPLICATION (Int. Cl. 3)**

B 65 G 43/02

**TECHNICAL FIELDS SEARCHED (Int.Cl. 3)**

B 65 G
H 02 P
F 02 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 02.09.1980 | V. ROLLEGHEM |

EPO Form 1503.1  06.78